# EUROPEAN PATENT SPECIFICATION

(11) **EP 2 663 784 B1**
(45) Date of publication and mention of the grant of the patent: **15.02.2017**
(21) Application number: 11802457.9
(22) Date of filing: 30.12.2011
(51) Int. Cl.: F16D 65/00, F16D 65/84

(54) **BRAKING DEVICE FOR A VEHICLE**
BREMSVORRICHTUNG FÜR EIN FAHRZEUG
DISPOSITIF DE FREINAGE POUR VÉHICULE

(30) Priority: 11.01.2011 SE 1150011
(43) Date of publication of application: 20.11.2013
(73) Proprietor: Landegren, Lars, 731 93 Köping (SE)
(72) Inventor: Landegren, Lars, 731 93 Köping (SE)
(74) Representative: Eurenius, Karin Lisa Maria
(86) International application number: PCT/EP2011/074314
(87) International publication number: WO 2012/095273

(56) References cited:
- FR-A1- 2 751 390
- JP-A- 2008 196 684
- US-A1- 2010 096 226

## Description

### FIELD OF THE INVENTION

The present invention relates to a braking device for a vehicle, the braking device comprises a braking member adapted to generate a braking action on the vehicle while releasing braking particles, wherein the braking member comprises a braking disc with a rotation axis, an enclosure around the braking member comprising at least one air inlet for providing cooling air to the braking member and at least one air outlet for removing the cooling air from the braking member. The air outlet comprises a filter element adapted to receive and maintain the released braking particles from the braking member.

### PRIOR ART

Braking devices generate a braking action on a vehicle by means of that the braking disc of the braking member is subjected to friction from a braking body which disperse braking particles from the braking member to the surrounding. A part of the braking particles comprises small particles that when being released becomes airborne.

The airborne braking particles are negative to the health of human and animals in the surrounding around the vehicle. The airborne braking particles may accumulate in the lungs of human and animals and cause inflammation and other respiratory diseases. The airborne braking particles may also cause cardiac and vascular diseases, and cancer.

It is accordingly desired to limit the content of airborne braking particles from vehicles. This can be done by means of braking devices comprising an enclosure around the braking member and filter for collecting the braking particles.

FR2751390 discloses a braking device for collecting braking particles. The device comprises an enclosure around the braking member and filters for gather the braking particles. The device comprises channels for guiding the surrounding air at the movement of the vehicle so that the braking particles are displaced to the filters.

US5162053 discloses a braking device for collecting braking particles. The device comprises an enclosure around the braking member and filters for gather the braking particles. The device comprises a fan adapted to generate an air stream so that the braking particles are displaced to the filters.

US 2010/096226 discloses a braking device for collecting braking particles. The device comprises an enclosure around the braking member and filters for gathering the braking particles. The device further comprises an impeller adapted to generate an air stream so that the braking particles are displaced to the filters.

JP 2008 196684 discloses a braking device comprising a braking member and an enclosure around the braking member for preventing braking particles from being dispersed.

### OBJECTS AND SUMMARY OF THE INVENTION

An object of the present invention is to provide a simple and cost effective braking device for collecting and reducing the disperse of braking particles from a vehicle.

This object is achieved with the previously mentioned braking device that is characterized in that the filter element is arranged at a lager distance from the rotation axis than the air inlet, wherein the braking disc comprises at least one cooling channel directed away from the rotation axis, which cooling channel is adapted to enable the cooling air to stream through the cooling channel, wherein said cooling channel and filter element is arranged so that at a rotation of the braking disc an air stream is generated that is directed towards the filter element.

The cooling channel is displaced in relation to the air around the braking disc. Thereby, the cooling channel affects the air so that the air stream is created. The filter element is arranged so that the filter element is exposed to the air stream. The generated air stream carries the braking particles that are dispersed from the braking member to the filter element.

The term cooling channel relates to a passage for air without limitation in the shape or form of the channel. The cooling channel is arranged so that at a rotation of the braking disc the cooling air in the cooling channel is affected so that said air stream is generated directly to the filter element.

The device has the advantage that the air stream that displaces the braking particles to the filter element is generated by means of the cooling channel in the braking disc. One or more cooling channel is usually arranged for providing a sufficient cooling of the braking device. No fan or arrangement for guiding air at movement of the vehicle or other modification of the braking device is necessary for generating the air stream that displaces the braking particles to the filter element. Accordingly, the device provides a simple and cost effective way of generating the air stream for reducing the disperse of braking particles.

The air stream generates an overpressure in the enclosure relative to the surrounding. Thereby, a sufficient cooling of the braking member is obtained without the use of a fan, arrangement for guiding air at motion of the vehicle or other modification of the braking device. Accordingly, the braking device provides sufficient cooling of the braking member in spite of the enclosure around the braking member.

The filter element is arranged in a radial/cylindrical part of the enclosure, wherein the radial part of the enclosure is located at a larger distance from the rotation axis than the braking disc. By means of arranging the filter element in the radial part of the enclosure, the filter element is directly exposed to the air stream from the cooling channels.

According to one embodiment of the invention, the radial part relates to the part of the enclosure that is located further away from the rotation axis than the cooling channels.

According to an embodiment of the invention, the cooling channel comprises a first opening that is directed towards the filter element, which first opening is adapted to generate the air stream at rotation of a braking disc.

The opening generates at rotation of the braking disc an interaction with the air that comes in to contact with the opening of the cooling channel, which results in that the air stream is generated in a direction towards the filter element.

According to one embodiment of the invention, the radial part is adjacent to the opening of the cooling channel. Thereby, the filters will be subjected directly to the generated air stream without interaction or guidance from other parts of the device.

According to an embodiment of the invention, the cooling channel comprises a space that separates a first inner side from a second inner side of the braking disc, and connections that connect the first inner side with the second inner side adapted to generate said air stream at a rotation of a braking disc. By means of the space and the connections the braking disc acts as a fan that streams cooling air through the cooling channel at rotation of the braking disc.

According to an embodiment of the invention, the braking device comprises an air gap between the enclosure and the cooling channel, wherein the first opening is directed towards the air gap.

The opening directed towards the air gap generates at rotation of the braking disc an interaction with the air in the gap and the cooling channel, which results in that the air stream is generated in a direction directly towards the filter element.

According to one embodiment of the invention, the enclosure comprises a first side axial arranged to a first side of the braking disc and a second side axial arranged to a second side of the braking disc, wherein braking disc is located between the first side and the second side of the enclosure so that a further air gap is formed between the first side and the braking disc respectively the second side and the braking disc, wherein at least one of the first side and the second side of the enclosure comprises a necking arranged so that at least a part of the further air gap is narrower at a location between the air inlet and the radial part in comparison to at the radial part.

The cooling air provides cooling of the exterior parts of the braking disc. The necking restricts the path for the air at which necking the air flow will be higher in comparison to at the radial part. Thereby, the cooling efficiency of the braking disc at the necking will be higher in comparison to at the radial part.

According to one embodiment of the invention, the enclosure comprises a third side directed away from the rotation axis, wherein the third side is convex in relation to rotation axis. By means of the convex form of the third side the cooling of the braking disc is improved.

According to one embodiment of the invention, the device comprises a braking body adapted to act on a part of the braking disc so that a braking action is obtained while generating heat and dispersing braking particles, wherein said necking is arranged at a corresponding location of the braking body. The heat will be generated at the position of the braking disc where the braking body acts on the braking disc, which position therefore requiring the most effective cooling. By means of the necking and the convex third side of the enclosure the cooling of the hottest part of the break disc will be improved while reducing the emission of braking particles.

With this optimal arrangement of the enclosure, the air stream is optimized for cooling the hot areas of the braking disc and transporting the braking particles to the filter element in comparison to a braking device lacking the enclosure.

According to an embodiment of the invention, the braking disc has an envelope surface directed away from the rotation axis, wherein the first opening is arranged in the envelope surface.

Accordingly the first opening is arranged so that a maximal movement of a first opening is obtained at rotation of the braking disc. Thereby, the movement of the braking disc is used optimal for generating the air stream.

According to an embodiment of the invention, the cooling channel extends from the first opening in the envelope surface to a second opening in the inner part of a braking disc, wherein the inner part of the braking disc is located closer to the rotation axis than the envelope surface.

According to an embodiment of the invention, the form of the first opening is rectangular.

According to an embodiment of the invention, the filter element is adapted to maintain braking particles with a particle size less than 50 µm, preferably less than 10 µm.

According to an embodiment of the invention, the filter element is replaceable. When the filter's capability to collect braking particles decreases under a certain level the filter may be replaced while the enclosure is located at the braking device.

According to an embodiment of the invention, the braking member generates a braking action on the vehicle while generating heat so that a temperature difference arises between the temperature of the braking disc and the temperature of the surrounding, wherein the temperature difference together with the rotation of the braking disc generates the air current that displaces the braking particles from the braking member to the filter element.

### BRIEF DESCRIPTION OF THE DRAWINGS

The invention will now be explained more closely by the description of different embodiments of the invention and with reference to the appended drawings.
- Fig. 1: discloses a cross section of a braking device according to a first embodiment of the invention.
- Fig. 2: discloses a side view of the braking device in fig. 1 and fig. 4.
- Fig. 3: discloses a perspective view of the braking device in fig. 1.
- Fig. 4: discloses a cross section of a braking device according to a second embodiment of the invention.
- Fig. 5: discloses a perspective view of the braking device in fig. 4.

### DETAILED DESCRIPTION OF PREFERRED EMBODIMENTS OF THE INVENTION

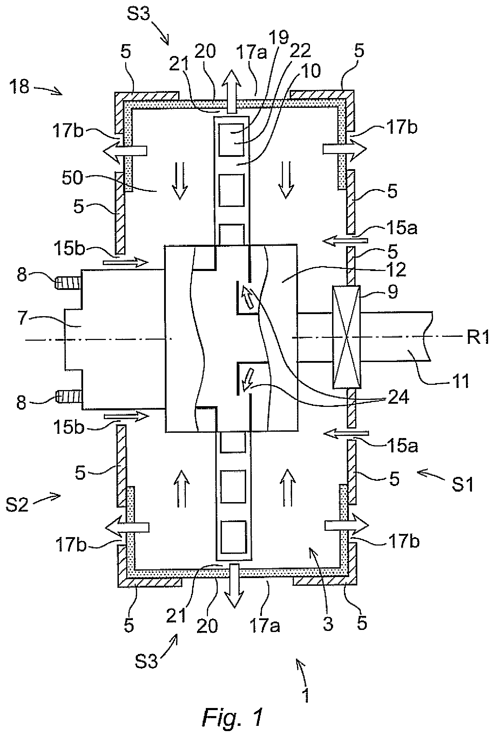

Figure 1 discloses a cross section of a braking device 1 for a vehicle according to a first embodiment of the invention. The braking device 1 comprises a braking member 3 and an enclosure 5.

The braking member 3 comprises a braking disc 10 with a rotation axis R1. The braking member 3 is connected to a wheel shaft 11.

The braking member 3 is adapted to be brought into contact with a braking body 12. The braking body 12 and the braking disc 10 is adapted to be brought into contact with each other so that a friction induced braking action on the vehicle is obtained while dispersing braking particles and generating heat.

The disclosed cross section in fig. 1 is arranged so that it extends perpendicular through the rotation axis R1. Furthermore, fig. 1 involves a cut out in the braking device 1 with the purpose of disclosing the arrangement of the braking disc 10 and the braking body 12.

The braking member 1 comprises a wheel hub 7 along which said rotation axis R1 extends. The braking device 1 further comprises bolts 8 for attaching a wheel (not disclosed), and a bearing 9.

The enclosure 5 is arranged so that it encloses the braking member 3. The enclosure 5 has a mainly cylindrical form with a first side S1 and a second side S2 that are perpendicular to the rotation axis R1. The first side S1 and the second side S2 is opposite to each other. The enclosure 5 further comprises a third cylindrical side S3 that is directed away from the rotation axis R1.

The enclosure 5 comprises two air inlets 15a, 15b, a first air inlet 15a from the first side S1 and a second air inlet 15b from the second side S2. The air inlets 15a, 15b are adapted to provide the braking member 3 with cooling air.

The enclosure 5 further comprises a plurality of air outlets 17a, 17b adapted to remove the cooling air from the braking member 3. The air outlets 17a, 17b are provided with a filter element 20. The filter element 20 is arranged in a radial part 18 of the enclosure 5, wherein the radial part is located at a larger distance from the rotation axis R1 than the braking disc 10.

The air outlet comprises a first group of air outlets 17a with the filter element 20 arranged in the third side S3 of the enclosure 5. The air outlets 17a, 17b are arranged at a larger distance from the rotation axis R1 than the air inlet 15a, 15b. In the disclosed embodiment also a second group of air outlets 17b are arranged at the first side S1 and the second side S2 of the enclosure 5.

The braking disc 10 comprises a plurality of cooling channels 19 adapted to allow cooling air to stream through the cooling channels 19 so that friction heat generated when braking the vehicle is removed.

The braking disc 10 has a cylindrical envelope surface at a certain distance from the rotation axis R1. Each cooling channel 19 extends from a first opening 22 in the envelope surface to a second opening 24 in an inner part of the braking disc 10, wherein the inner part of the braking disc 10 is located closer to the rotation axis R1 than the envelope surface. In the disclosed embodiment, the first opening 22 has a rectangular form.

The cooling channel 19 is adapted, at a rotation of the braking disc 10, by means of the walls of the cooling channel 19, to generate an air stream that drives the cooling air into the second opening 24 through the cooling channel 19 and out through the first opening 22. In fig. 1 the cooling channel 19 has a common second opening 24 for the cooling air to the cooling channels 19.

The braking device 1 comprises an air gap 21 between the enclosure 5 and the envelope surface of the braking disc 10. The first opening 22 in the envelope surface is at a rotation of the braking disc 10 adapted to generate an air stream that is directly directed towards the filter element 20. The edges that defines the first opening of each cooling channel 19 effects the air in the air gap 21 at a rotation so that the air stream is generated in a direction towards the filter element 20 at the air outlet 17a, 17b.

The air stream is adapted to displace airborne braking particles towards the filter element 20 at the air outlets 17a, 17b. Thereby, the braking particles are displaced towards the filter element 20 without fans or other external means for generating the air stream.

The filter element 20 is adapted to collect the braking particles. The filter element 20 is exchangeable. Thereby, the filter element 20 can be exchanged to a new filter element 20 when the filter element 20 no longer can maintain sufficient amount of further braking particles.

In a preferred embodiment, the filter element 20 is arranged in one piece that corresponds to the form of the enclosure 5. Thereby, the filter element 20 at all air outlets 17a, 17b can be exchanged in a simple procedure.

The first side S1 and the second side S2 are arranged on opposite sides of the braking disc 10 so that a further air gap 50 is formed.

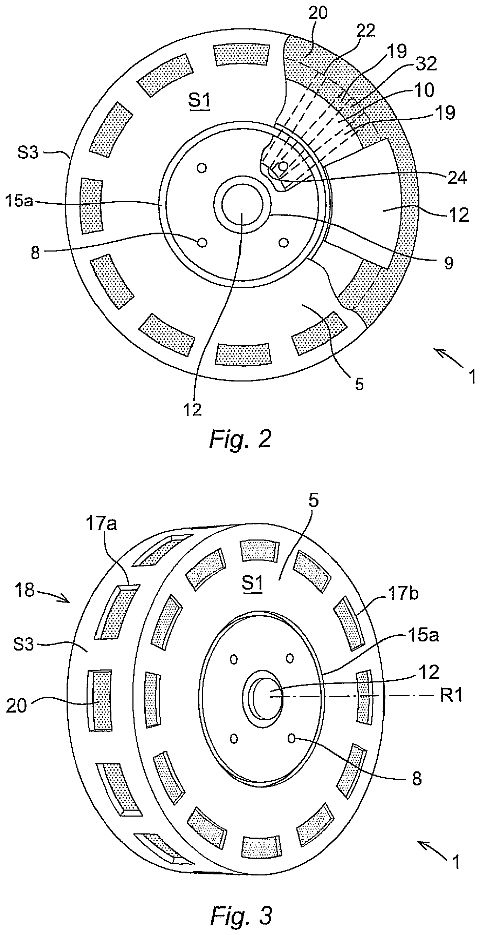

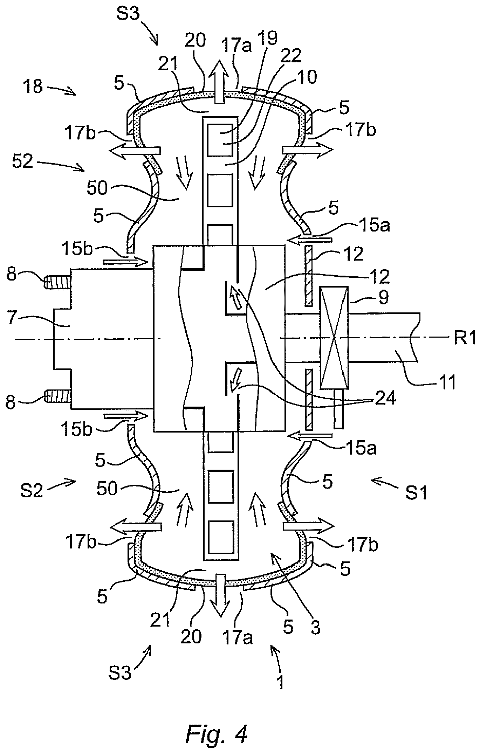

Figure 2 discloses a side view of the braking device 1 in fig. 1 and fig. 4 seen from a first side S1. The figure also discloses an inner part of a braking device 1 by means of a cut out in the enclosure 5. Figure 3 discloses a perspective view of the braking device 1 in fig. 1.

By means of fig. 2 and 3, the first S1 and the third side S3 of enclosure 5 are disclosed. The air outlets 17a, 17b is arranged in the first side S1, in the second side S2 and the third side S3.

The air inlets 15a, 15b each comprise a circular opening at the hub 12 on each of the first side S1 and the second side S2. The air outlets 17a, 17b are located at a larger distance from the rotation axis R1 than the air inlets 15a, 15b.

The first group of air outlets 17a is located in the radial part 18 of the third side S3 of the enclosure 5. The second group of air outlets 17b is located at the first side S1 respectively the second side S2 of enclosure 5.

The cooling channels 19 extends from a first opening 22 in the envelope surface of a braking disc 10 to a second opening 24 in an inner part of the braking disc 10. The inner part of a braking disc 10 is located closer to the rotation axis R1 than the envelope surface of a braking disc 10. The air stream is adapted to stream through the cooling channels 19 from the second opening 24 to the first opening 22.

The cooling channel 19 comprises a space that separates the first inner side A1 from a second inner side A2 of the braking disc 10. The second inner side A2 is not visible in fig. 2. The first inner side A1 and the second inner side A2 are essentially parallel.

The cooling channel 19 comprises further a plurality of connections 32 that partly connects the first inner side A1 with the second inner side A2. The connections 32 are adapted to generate the air stream at a rotation of the braking disc 10. By means of the space and the connection 32, the braking disc 10 acts as a fan that drives the cooling air through the cooling channels 19 at a rotation of the braking disc 10.

In fig. 2, the connection 32 are formed as strait walls resulting in that the cooling channels 19 extends directly from the first opening 22 in the envelope surface to the second opening 24.

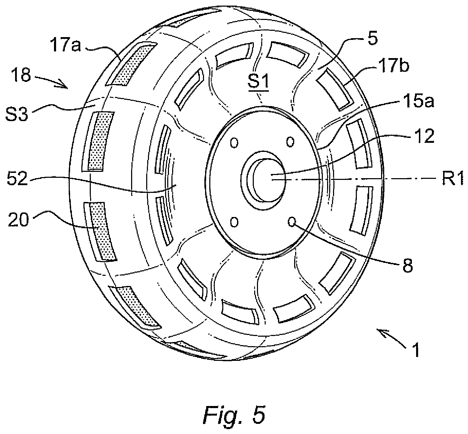

Fig. 4 and 5 discloses a second embodiment of the invention. The first side S1 and the second side S2 furthermore comprises a necking 52 that narrows the further air gap 50 at a corresponding location where the braking body 12 acts on the braking disc 10.

The third side S3 of the enclosure 5 is formed convex in relation to the rotation axis R1. Thereby, a portion of the generated air stream is guided into the further air gap 50 for cooling the outer side of the braking disc 10. Accordingly, the generated air steam is both used for displacing braking particles to the filter element 20 and to improve the cooling of the braking disc 10 where cooling at most is needed.

Accordingly, the second embodiment differs from the first embodiment in that the enclosure 5 is provided with the necking 52 arranged so that at least a part of the further air gap 50 is narrower between the air inlet 15a, 15b and the radial part 18 in comparison to at the radial part 18. Furthermore, the third side S3 of the enclosure 5 is arranged convex in relation to relation to rotation axis R1.

By means of the necking 52 and the convex third side S3, a portion of the air stream generated will be redirected into the further air gap 50 and the redirected portion of the air stream will be guide to the hottest part of the braking disc 10 by means of the necking 52 and another portion of the air stream will be directly directed to the filter element 20. The hottest part of the braking disc 10 is a part of the braking disc 10 where the braking body 12 acts on the braking disc 10 with the resulting generation of friction heat and dispersing of braking particles. Thereby, the cooling of the hottest part of the braking disc 10 is improved while emission of braking particles is reduced.

The invention is not limited to the disclosed embodiments but can be modified and varied within the framework of the following patent claims.

The connection 32 of the braking disc is arranged in order to contribute to the generation of the air stream. For example, as an alternative to the strait walls in fig. 2, the connections 32 are intermittent arranged so that the connections 32 act as a fan, and thereby generates the air stream. For example, a plurality of connections 32 with cylindrical form is provided between the first inner side A1 and the second inner side A2.

For example the first opening can be of different shapes, such as circular, oval, etc. According to an alternative embodiment, the first opening 22 is provided with a fin that protrudes away from the rotation axis R1, which fin is adapted to increase the strength of the air stream.

## Claims

1. Braking device (1) for a vehicle, the braking device (1) comprises
- a braking member (3) adapted to generate a braking action on the vehicle while dispersing braking particles, wherein the braking member (3) comprises a braking disc (10) with a rotation axis (R1),
- an enclosure (5) around the braking member (3) comprising at least one air inlet (15a, 15b) for providing cooling air to the braking member (3) and at least one air outlet (17a, 17b) for removing the cooling air from the braking member (3), wherein the air outlet (17a, 17b) comprises a filter element (20) adapted to receive and collecting the released braking particles from the braking member (3), wherein the filter element (20) is arranged at a larger distance from the rotation axis (R1) than the air inlet (15a, 15b), wherein the braking disc (10) comprises at least one cooling channel (19) directed away from the rotation axis (R1), which cooling channel (19) is adapted to allow the cooling air to stream through the cooling channel (19),
**characterized in that**
the cooling channel (19) comprises a first opening (22) that is directed towards the filter element (20), which first opening (22) is adapted to, at a rotation of the braking disc (10), generate an air stream that is directly directed towards the filter element (20).

2. Braking device (1) according to claim 1, **characterized in that** the filter element (20) is arranged in a radial part (18) of enclosure (5), wherein the radial part (18) is located at a larger distance from the rotation axis (R1) than the braking disc (10).

3. Braking device (1) according to any of claim 1 or 2 , **characterized in that** the braking device (1) comprises an air gap (21) between the enclosure (5) and the cooling channel (19), wherein the first opening (22) is directed towards the air gap (21).

4. Braking device (1) according to any of the preceding claims, **characterized in that** the enclosure (5) comprises a first side (S1) axial arranged to a first side (A1) of the braking disc (10) and a second side (S2) axial arranged to a second side (A2) of the braking disc (10), wherein braking disc (10) is located between the first side (S1) and the second side (S2) of the enclosure (5) so that a further air gap (50) is formed between the first side (S1) and the braking disc (5) respectively the second side (S2) and the braking disc (5), wherein at least one of the first side (S1) and the second side (S2) of the enclosure (5) comprises a necking (52) arranged so that at least a part of the further air gap (50) is narrower between the air inlet (15a, 15b) and the radial part (18) in comparison to at the radial part (18).

5. Braking device (1) according to claim 4, **characterized in that** the enclosure (5) comprises a third side (S3) directed away from the rotation axis (R1), wherein the third side (S3) is convex in relation to rotation axis (R1) so that a portion of the air stream is adapted to be guided towards the further air gap (50).

6. Braking device (1) according to any of claim 4 and 5, **characterized in that** the device (1) comprises a braking body (12) adapted to act on a part of the braking disc (10) so that a braking action is obtained while generating heat and dispersing braking particles, wherein said necking (52) is arranged in the enclosure (5) at a corresponding location of the braking body (12).

7. Braking device (1) according to any of the preceding claims, **characterized in that** the braking disc (10) has an envelope surface directed away from the rotation axis (R1), wherein the first opening (22) is arranged in the envelope surface.

8. Braking device (1) according to any of the preceding claims, **characterized in that** the cooling channel (19) extends from the first opening (22) in the envelope surface to a second opening (24) in an inner part of the braking disc (10), wherein the inner part of a braking disc is located closer to the rotation axis (R1) than the envelope surface.

9. Braking device (1) according to any of the preceding claims, **characterized in that** the cooling channel (19) comprises a space that separates a first inner side (A1) from an second inner side (A2) of the braking disc (10), and connections (32) that connects the first inner side (A1) with the second inner side (A2) adapted to generate said air stream at a rotation of the braking disc (10).

10. Braking device (1) according to any the preceding claims, **characterized in that** the filter element (20) is adapted to maintain braking particles with a particle size less than 15 µm, preferably less than 10 µm.

11. Braking device (1) according to any of the preceding claims, **characterized in that** the filter element (20) is exchangeable.

## Patentansprüche

1. Bremsvorrichtung (1) für ein Fahrzeug, wobei die Bremsvorrichtung (1) Folgendes umfasst:
- ein Bremsteil (3), dazu ausgebildet, eine Bremswirkung auf das Fahrzeug unter Zerstreuung von Bremspartikeln zu erzeugen, wobei das Bremsteil (3) eine Bremsscheibe (10) mit einer Rotationsachse (R1) umfasst,
- eine das Bremsteil (3) umgebende Einfassung (5) umfassend mindestens einen Lufteinlass (15a, 15b) zur Versorgung des Bremsteils (3) mit Kühlluft und mindestens einen Luftauslass (17a, 17b) zum Ableiten der Kühlluft von dem Bremsteil (3), wobei der Luftauslass (17a, 17b) ein Filterelement (20) umfasst, ausgebildet zum Aufnehmen und Sammeln der von dem Bremsteil (3) freigegebenen Bremspartikel, wobei das Filterelement (20) in einer größeren Entfernung von der Rotationsachse (R1) angeordnet ist als der Lufteinlass (15a, 15b), wobei die Bremsscheibe (10) mindestens einen von der Rotationsachse (R1) abgewandten Kühlkanal (19) umfasst, wobei der Kühlkanal (19) dazu ausgebildet ist, die Kühlluft durch den Kühlkanal (19) fließen zu lassen,
**dadurch gekennzeichnet, dass**
der Kühlkanal (19) eine dem Filterelement (20) zugewandte erste Öffnung (22) aufweist, die dazu ausgebildet ist, bei einer Rotation der Bremsscheibe (10) einen direkt auf das Filterelement (20) gerichteten Luftstrom zu erzeugen.

2. Bremsvorrichtung (1) nach Anspruch 1, **dadurch gekennzeichnet, dass** das Filterelement (20) in einem radialen Teil (18) der Einfassung (5) angeordnet ist, wobei der radiale Teil (18) in einer größeren Entfernung von der Rotationsachse (R1) angeordnet ist als die Bremsscheibe (10).

3. Bremsvorrichtung (1) nach einem der Ansprüche 1 oder 2, **dadurch gekennzeichnet, dass** die Bremsvorrichtung (1) einen Luftspalt (21) zwischen der Einfassung (5) und dem Kühlkanal (19) umfasst, wobei die erste Öffnung (22) auf den Luftspalt (21) gerichtet ist.

4. Bremsvorrichtung (1) nach einem der vorhergehenden Ansprüche, **dadurch gekennzeichnet, dass** die Einfassung (5) eine erste axial zu einer ersten Seite (A1) der Bremsscheibe (10) angeordnete Seite (S1) und eine zweite axial zu einer zweiten Seite (A2) der Bremsscheibe (10) angeordnete Seite (S2) umfasst, wobei die Bremsscheibe (10) zwischen der ersten Seite (S1) und der zweiten Seite (S2) der Einfassung (5) angeordnet ist, so dass ein weiterer Luftspalt (50) zwischen der ersten Seite (S1) und der Bremsscheibe (10) bzw. der zweiten Seite (S2) und der Bremsscheibe (10) gebildet wird, wobei mindestens eine der ersten Seite (S1) und der zweiten Seite (S2) der Einfassung (5) einen Einschnitt (52) umfasst, der derart angeordnet ist, dass zumindest ein Teil des weiteren Luftspalts (50) zwischen dem Lufteinlass (15a, 15b) und dem radialen Teil (18) schmaler ist als das radiale Teil (18).

5. Bremsvorrichtung (1) nach Anspruch 4, **dadurch gekennzeichnet, dass** die Einfassung (5) eine von der Rotationsachse (R1) abgewandte dritte Seite (S3) umfasst, wobei die dritte Seite (S3) gegenüber der Rotationsachse (R1) derart konvex ist, dass ein Teil des Luftstroms dazu ausgebildet ist, zu dem weiteren Luftspalt (50) geführt zu werden.

6. Bremsvorrichtung (1) nach einem der Ansprüche 4 und 5, **dadurch gekennzeichnet, dass** die Vorrichtung (1) einem zur Einwirkung auf die Bremsscheibe (10) ausgebildeten Bremskörper (12) umfasst, so dass eine Bremswirkung unter Erzeugung von Hitze und der Zerstreuung von Bremspartikeln erreicht wird, wobei der Einschnitt (52) an einer entsprechenden Position des Bremskörpers (12) in der Einfassung (5) angeordnet ist.

7. Bremsvorrichtung (1) nach einem der vorhergehenden Ansprüche, **dadurch gekennzeichnet, dass** die Bremsscheibe (10) eine von der Rotationsachse (R1) abgewandte Hüllfläche aufweist, wobei die erste Öffnung (22) in der Hüllfläche angeordnet ist.

8. Bremsvorrichtung (1) nach einem der vorhergehenden Ansprüche, **dadurch gekennzeichnet, dass** der Kühlkanal (19) von der ersten Öffnung (22) in der Hüllfläche zu einer zweiten Öffnung (24) in einem Innenteil der Bremsscheibe (10) verläuft, wobei das Innenteil der Bremsscheibe näher an der Rotationsachse (R1) befindlich ist als die Hüllfläche.

9. Bremsvorrichtung (1) nach einem der vorhergehenden Ansprüche, **dadurch gekennzeichnet, dass** der Kühlkanal (19) einen Freiraum umfasst, der eine erste Innenseite (A1) von einer zweiten Innenseite (A2) der Bremsscheibe (10) trennt, und Verbindungen (32) umfasst, die die erste Innenseite (A1) mit der zweiten Innenseite (A2) verbinden und dazu ausgebildet sind, bei einer Rotation der Bremsscheibe (10) den Luftstrom zu erzeugen.

10. Bremsvorrichtung (1) nach einem der vorhergehenden Ansprüche, **dadurch gekennzeichnet, dass** das Filterelement (20) dazu ausgebildet ist, Bremspartikel mit einer Partikelgröße kleiner als 15 µm, bevorzugt kleiner als 10 µm, zu halten.

11. Bremsvorrichtung nach einem der vorhergehenden Ansprüche, **dadurch gekennzeichnet, dass** das Filterelement (20) austauschbar ist.

## Revendications

1. Dispositif de freinage (1) pour un véhicule, le dispositif de freinage (1) comprend :
- un élément de freinage (3) adapté pour générer une action de freinage sur le véhicule tout en dispersant des particules de freinage, dans lequel l'élément de freinage (3) comprend un disque de freinage (10) avec un axe de rotation (R1),
- une enceinte (5) autour de l'élément de freinage (3) comprenant au moins une entrée d'air (15a, 15b) pour fournir de l'air de refroidissement à l'élément de freinage (3) et au moins une sortie d'air (17a, 17b) pour retirer l'air de refroidissement de l'élément de freinage (3), dans lequel la sortie d'air (17a, 17b) comprend un élément filtrant (20) adapté pour recevoir et collecter les particules de freinage libérées de l'élément de freinage (3), dans lequel l'élément filtrant (20) est agencé à une plus grande distance de l'axe de rotation (R1) que l'entrée d'air (15a, 15b), dans lequel le disque de freinage (10) comprend au moins un canal de refroidissement (19) dirigé loin de l'axe de rotation (R1), lequel canal de refroidissement (19) est adapté pour permettre à l'air de refroidissement de passer par le canal de refroidissement (19),
**caractérisé en ce que**
le canal de refroidissement (19) comprend une première ouverture (22) qui est dirigée vers l'élément filtrant (20), laquelle première ouverture (22) est adaptée, lors d'une rotation du disque de freinage (10), pour générer un courant d'air qui est dirigé directement vers l'élément filtrant (20).

2. Dispositif de freinage (1) selon la revendication 1, **caractérisé en ce que** l'élément filtrant (20) est agencé dans une partie radiale (18) de l'enceinte (5), dans lequel la partie radiale (18) est située à une distance plus grande de l'axe de rotation (R1) que le disque de freinage (10).

3. Dispositif de freinage (1) selon l'une quelconque des revendications 1 ou 2, **caractérisé en ce que** le dispositif de freinage (1) comprend une fente à air (21) entre l'enceinte (5) et le canal de refroidissement (19), dans lequel la première ouverture (22) est dirigée vers la fente à air (21).

4. Dispositif de freinage (1) selon l'une quelconque des revendications précédentes, **caractérisé en ce que** l'enceinte (5) comprend un premier côté (S1) agencé axialement sur un premier côté (A1) du disque de freinage (10) et un second côté (S2) agencé axialement sur un second côté (A2) du disque de freinage (10), dans lequel le disque de freinage (10) est situé entre le premier côté (S1) et le second côté (S2) de l'enceinte (5) de sorte qu'une fente à air supplémentaire (50) soit formée entre le premier côté (S1) et le disque de freinage (5) respectivement le second côté (S2) et le disque de freinage (5), dans lequel au moins un du premier côté (S1) et du second côté (S2) de l'enceinte (5) comprend un étranglement (52) agencé de sorte qu'au moins une partie de la fente à air supplémentaire (50) soit plus étroite entre l'entrée d'air (15a, 15b) et la partie radiale (18) en comparaison de sur la partie radiale (18).

5. Dispositif de freinage (1) selon la revendication 4, **caractérisé en ce que** l'enceinte (5) comprend un troisième côté (S3) dirigé loin de l'axe de rotation (R1), dans lequel le troisième côté (S3) est convexe par rapport à l'axe de rotation (R1) de sorte qu'une partie du courant d'air soit adaptée pour être guidée vers la fente à air supplémentaire (50).

6. Dispositif de freinage (1) selon l'une quelconque des revendications 4 et 5, **caractérisé en ce que** le dispositif (1) comprend un corps de freinage (12) adapté pour agir sur une partie du disque de freinage (10) de sorte qu'une action de freinage soit obtenue tout en générant de la chaleur et dispersant des particules de freinage, dans lequel ledit étranglement (52) est agencé dans l'enceinte (5) à un endroit correspondant du corps de freinage (12).

7. Dispositif de freinage (1) selon l'une quelconque des revendications précédentes, **caractérisé en ce que** le disque de freinage (10) a une surface enveloppe dirigée loin de l'axe de rotation (R1), dans lequel la première ouverture (22) est agencée dans la surface enveloppe.

8. Dispositif de freinage (1) selon l'une quelconque des revendications précédentes, **caractérisé en ce que** le canal de refroidissement (19) s'étend depuis la première ouverture (22) dans la surface enveloppe à une seconde ouverture (24) dans une partie intérieure du disque de freinage (10), dans lequel la partie intérieure d'un disque de freinage est située plus près de l'axe de rotation (R1) que la surface enveloppe.

9. Dispositif de freinage (1) selon l'une quelconque des revendications précédentes, **caractérisé en ce que** le canal de refroidissement (19) comprend un espace qui sépare un premier côté intérieur (A1), d'un second côté intérieur (A2) du disque de freinage (10), et des connexions (32) qui relient le premier côté intérieur (A1) au second côté intérieur (A2) adapté pour générer ledit courant d'air lors d'une rotation du disque de freinage (10).

10. Dispositif de freinage (1) selon l'une quelconque des revendications précédentes, **caractérisé en ce que** l'élément filtrant (20) est adapté pour maintenir des particules de freinage avec une taille de particules inférieure à 15 µm, de préférence inférieure à 10 µm.

11. Dispositif de freinage (1) selon l'une quelconque des revendications précédentes, **caractérisé en ce que** l'élément filtrant (20) est échangeable.
